Europäisches Patentamt

European Patent Office

Office européen des brevets

(11) EP 0 845 686 A2

(19)

(12) **EUROPÄISCHE PATENTANMELDUNG**

(43) Veröffentlichungstag:
03.06.1998 Patentblatt 1998/23

(51) Int Cl.$^6$: **G01S 7/41**

(21) Anmeldenummer: 97440121.8

(22) Anmeldetag: 28.11.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 29.11.1996 DE 19649618

(71) Anmelder: ALCATEL ALSTHOM COMPAGNIE
GENERALE D'ELECTRICITE
75008 Paris (FR)

(72) Erfinder:
• Trompf, Michael, Dr.
71296 Heimsheim (DE)

• Raudonat, Ullrich
71732 Tamm (DE)
• Thierer, Gebhard, Dr.
71254 Ditzingen (DE)
• Strecker, Andreas
73066 Uhingen (DE)

(74) Vertreter: Schätzle, Albin, Dipl.-Phys. et al
Alcatel Alsthom
Intellectual Property Department,
Postfach 30 09 29
70449 Stuttgart (DE)

(54) **Verfahren und Vorrichtung zur automatischen Klassifikation von Objekten**

(57) Zur automatischen Klassifikation von Objekten mittels Doppler-verbreiterter Radarecho-Signale werden neuronale Netze eingesetzt.

Bei einem Verfahren zur automatischen Klassifikation von Objekten mittels Doppler-verbreiterter Radarecho-Signale wird zur Klassifikation ein neuronales Netz (NET) mit Ausgangsknoten für Klassen (K1, ..., K5) verwendet. Aus Aktivierungen der Ausgangsknoten (ON1, ..., ON5) wird ein Maß (M) für die Sicherheit, daß ein Objekt einer bestimmten Klasse zuzuordnen ist, bestimmt und eine Klassifikation findet nur dann statt, wenn das Maß (M) einen vorgegebenen Schwellenwert übersteigt. Findet keine Klassifikation statt, so können weitere Radarecho-Signale des selben Objektes oder Beobachtungsabschnittes ermittelt werden und auf aufeinanderfolgende Radarecho-Signale kann eine Mittelungstechnik angewandt werden. Zusätzlich kann der Schwellenwert mit zunehmender Anzahl aufeinanderfolgender Radarecho-Signale des selben Objektes oder Beobachtungsabschnittes verringert werden.

Fig.1

EP 0 845 686 A2

**Beschreibung**

Die Erfindung betrifft ein Verfahren und eine Vorrichtung zur automatischen Klassifikation von Objekten mittels Doppler-verbreiterter Radarecho-Signale unter Verwendung eines neuronalen Netzes.

Im Stand der Technik ist es bekannt, Objekte mittels Doppler-verbreiterter Radarecho-Signale in Zielklassen zu klassifizieren. Zur Klassifikation werden neuronale Netze eingesetzt. Eine Vorrichtung und ein Verfahren zur automatischen Klassifikation von Objekten, die ein neuronales Netz vom Typ Multi-Layer Perceptron mit einer Eingangsschicht aus Eingangsknoten für Merkmale der Doppler-verbreiterten Radarecho-Signale, verborgenen Schichten und einer Ausgangsschicht aus Ausgangsknoten nutzt, ist in einem Aufsatz von J. Martinez Madrid et al, (,,A Neural Network Approach to Doppler-Based Target Classification", Universidad Politécnica de Madrid, Spanien, Seiten 450 bis 453) beschrieben.

Ein nach einem anderen Prinzip arbeitendes Verfahren zur Klassifikation von Objekten ist aus einem Artikel von M. Menon (,,An Automatic Ship Classification System for ISAR Imagery", SPIE Vol 2492 1995, Seiten 373 bis 388) bekannt. Dabei werden schiffe an Hand digitalisierter Videobilder eines ISAR-Radargerätes unter Verwendung eines neuronalen Netzes vom Typ Adaptive Clustering Network in Schiffsklassen eingeteilt. Dem neuronalen Netz werden Merkmalsvektoren verschiedener Videobilder präsentiert. Während einer Trainingsphase erzeugt das neuronale Netz verschiedene Gruppen für die verschiedenen Ansichten ein und desselben Objektes, wobei auch ähnliche Merkmalsvektoren verschiedener Objekte zu einer Gruppe zusammengefaßt werden. Eine Gruppe kann daher Merkmalsvektoren von Mitgliedern verschiedener Schiffsklassen enthalten und wird entweder der mehrheitlich vertretenen Schiffsklasse zugeordnet oder als Klasse unbekannter Objekte behandelt, je nach Höhe eines als Cluster Class Contrast bezeichneten Schwellenwertes. Dieser Schwellenwert legt fest, wie groß die Mehrheit innerhalb einer Gruppe sein muß, damit die Gruppe einer Schiffsklasse zugeordnet wird.

Die im Stand der Technik bekannten Verfahren und Vorrichtungen zur Klassifikation von Objekten haben den Nachteil, daß sie relative hohe Raten von falscher Klassifikation aufweisen.

Aufgabe der Erfindung ist es, eine Vorrichtung und ein Verfahren zur automatischen Klassifikation von Objekten anzugeben, welche gegenüber dem Stand der Technik eine geringere Rate von falscher Klassifikation aufweisen.

Die Aufgabe wird hinsichtlich des Verfahrens gelöst durch die Merkmale des Patentanspruches 1 und hinsichtlich der Vorrichtung durch die Merkmale des Patentanspruches 12. Vorteilhafte Ausgestaltungen sind den abhängigen Patentansprüchen zu entnehmen.

Ein Vorteil der Erfindung besteht darin, daß in der Signaldauer sehr kurze Radarecho-Signale im Bereich von etwa hundert Millisekunden zur Klassifikation verwendet werden können.

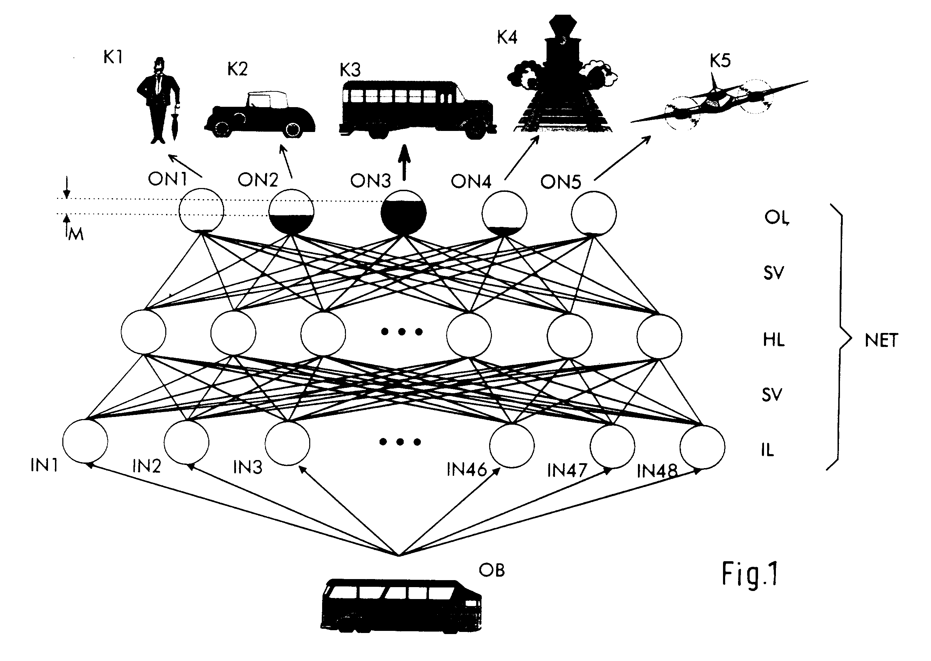

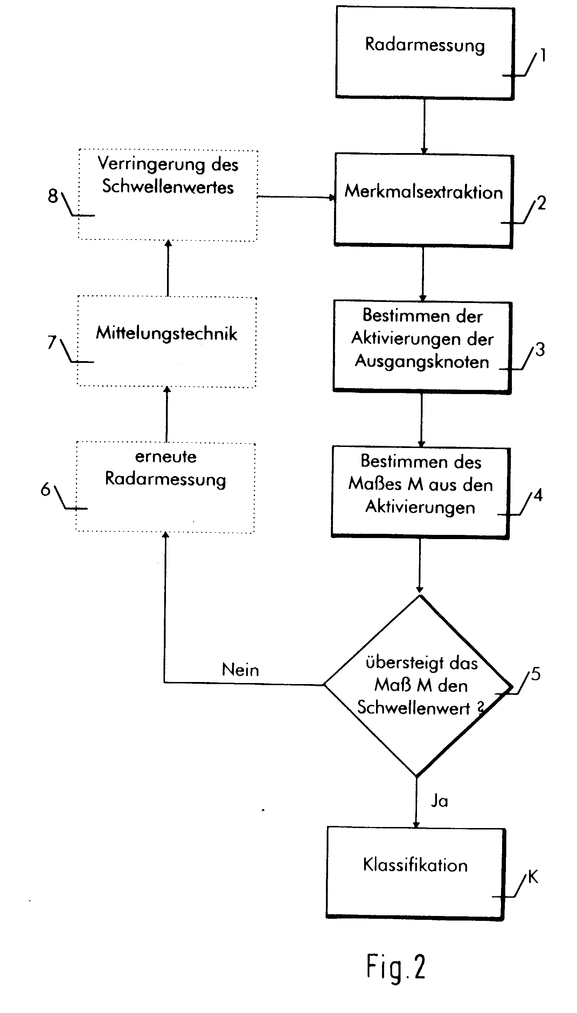

Im folgenden wird die Erfindung anhand der Figuren 1 und 2 und eines Ausführungsbeispieles erläutert. Es zeigen:

Figur 1    eines schematische Darstellung eines neuronalen Netzes und

Figur 2    ein Flußdiagramm eines erfindungsgemäßen Verfahrens.

Grundlage der Erfindung ist die Klassifikation von Objekten an Hand von Doppler-verbreiterten Radarecho-Signalen. Ausgesendete Radarsignale werden von einem bewegten Objekt, welches zu klassifizieren ist, reflektiert. Durch den Doppler-Effekt ist das reflektierte Radarsignal gegenüber dem ausgesandten Radarsignal in der Frequenz verschoben und verbreitert. Während die Frequenzverschiebung charakteristisch ist für die Geschwindigkeit des Objektes in Richtung radial zum Radarsender, ist die spektrale Verbreiterung charakteristisch für innere Bewegungen des Objektes, wie beispielsweise Vibrationen durch ein Antriebsaggregat oder die Rotation eines Propellers oder einer Antriebswelle. Die für ein Objekt charakteristische spektrale Verbreiterung wird als Dopplersignal bezeichnet und stellt als Differenz zwischen reflektiertem und ausgesandtem Radarsignal ein akustisches Tonsignal dar. Klassifikation eines Objektes bedeutet in diesem Zusammenhang, daß ein Objekt erkannt und einer bestimmten Klasse aus einer Reihe vorgegebener Klassen von Objekten zugeordnet wird. Die Klassifikation erfolgt unter Verwendung eines neuronalen Netzes.

Ein neuronales Netz besteht aus Knoten und synaptischen Verbindungen zwischen den Knoten. Den synaptischen Verbindungen sind Gewichte zugewiesen, die durch ein Training mit Trainingsdaten festgelegt sind. Die Knoten zeigen eine Aktivierung als Ergebnis von Eingangsdaten. Das neuronale Netz ist in verschiedene hierarchisch angeordnete Schichten unterteilt, wobei jeder Knoten einer unteren Schicht mit jedem Knoten einer oberen Schicht über synaptische Verbindungen verbunden ist. Ein neuronales Netz mit eines solchen Topologie wird als Multi-Layer Perceptron bezeichnet. Die Knoten erhalten als Eingangsdaten die Aktivierung der Knoten der nächst niedrigeren Schicht, multipliziert mit dem Gewicht der jeweiligen synaptischen Verbindung. Demnach ergibt sich die Aktivierung $y_n$ eines Knotens $N_n$ nach einer Formel vom Typ:

$$y_n = f(\sum_i w_{in} x_i)$$

wobei f() eine vorgegebene Funktion, $x_i$ die Aktivierung des i-ten Knotens $N_i$ und $w_{in}$ das Gewicht der synapti-

schen Verbindung zwischen dem i-ten Knoten $N_i$ und dem n-ten Knoten $N_n$ ist. Die Eingangsdaten der Knoten der untersten, als Eingangsschicht bezeichneten Schicht, sind Merkmale der Doppler-verbreiterten Radarecho-Signale und aus der Aktivierung der Knoten der obersten, als Ausgangsschicht bezeichneten Schicht ermittelt sich das Klassifikationsergebnis. Ein Objekt gehört mit der größten Wahrscheinlichkeit der Klasse an, deren Ausgangsknoten die höchste Aktivierung zeigt.

Eine Klassifikation durch das neuronale Netz erfolgt dergestalt, daß aus vergangenen gespeicherten Klassifikationsergebnissen auf zukünftige geschlossen wird. Dazu ist das Netz mit Trainingsdaten von verschiedenen Objekten aller Klassen trainiert. Dabei wurden dem neuronalen Netz die Trainingsdaten sooft präsentiert, bis das Netz durch Variation der Gewichte der synaptischen Verbindungen gelernt hatte, alle Trainingsdaten richtig zuzuordnen. Das Training erfolgt nach einen Algorithmus, wie beispielsweise dem Error-Backpropagation Algorithmus, der in dem Aufsatz von J. Martinez Madrid et al, (,,A Neural Network Approach to Doppler-Based Target Classification", Universidad Politécnica de Madrid, Spanien, Seiten 450 bis 453) beschrieben ist. Bei dem Training wurden alle Ausgangsknoten für sich trainiert, d.h. daß dem neuronalen Netz für jede Klasse Trainingsdaten von Objekten, die der jeweiligen Klasse angehören, antrainiert wurden, bis das Netz alle Trainingsdaten sicher der richtigen Klasse zuordnen konnte. Die durch das Training einmalig bestimmten Gewichte der synaptischen Verbindungen können im Anschluß an das Training ausgelesen werden um die Topologie des Netzes in beliebiger Stückzahl zu reproduzieren. Dadurch muß also nicht jede einzelne Vorrichtung trainiert werden.

Eine weitere Möglichkeit für das Training ist, den in ,,The Cascade-Correlation Learning Architecture", Scott I. Fahlman und Christian Lebiere, August 29 1991, School of Computer Science Carnegie Mellon University Pittsburg, PA 15213 beschriebenen Algorithmus für kaskadenkorrelierte Netze zu verwenden. Nach dieser Methode wird das neuronale Netz während des Trainings erzeugt, d.h. daß durch das Training sowohl die Gewichte der synaptischen Verbindungen wie auch die Topologie des Netzes festgelegt werden.

Um die Wahrscheinlichkeit für eine falsche Klassifikation zu verringern besteht ein Grundgedanke der Erfindung darin, aus der Aktivierung der Ausgangsknoten ein Maß für die Sicherheit zu bestimmen, daß ein Objekt einer bestimmten Klasse zuzuordnen ist, und das Objekt nur dann zu klassifizieren, wenn dieses Maß einen vorgegebenen Schwellenwert übersteigt. Zusätzlich kann, wenn keine Klassifikation statt gefunden hat, solange jeweils ein neues Doppler-verbreitertes Radarecho-Signal des selben Objektes oder Beobachtungsabschnittes ermittelt werden, bis das Maß den Schwellenwert übersteigt. Dabei ist es von besonderem Vorteil, entweder über mehrere Doppler-verbreiterte Radarecho-Signale des selben Objektes oder Beobachtungsabschnittes zu mitteln, oder über die Aktivierungen eines Ausgangsknotens zu mitteln, die dieser bei verschiedenen Doppler-verbreiterten Radarecho-Signalen des selben Objektes oder Beobachtungsabschnittes zeigt.

In Figur 1 ist ein neuronales Netz NET eines Ausführungsbeispieles schematisch dargestellt. Es hat eine Eingangsschicht IL aus 48 Eingangsknoten IN1, ..., IN48, eine verborgene Schicht HL und eine Ausgangsschicht OL aus fünf Ausgangsknoten ON1, ... ON5. Alle Knoten einer Schicht sind über synaptische Verbindungen SV mit allen Knoten einer darunterliegenden Schicht verbunden. Jeder Ausgangsknoten ON1, ..., ON5 repräsentiert eine Klasse. In dem Ausführungsbeispiel ist das neuronale Netz für die Klassifikation von Objekten in folgende fünf Klassen K1 bis K5 trainiert: Fußgänger K1, Auto K2, Bus K3, Eisenbahn K4 und Flugzeug K5. Findet eine Klassifikation statt, so bedeutet das, daß ein Objekt anhand eines Doppler-verbreiterten Radarecho-Signales erkannt und einer der aufgeführten Klassen K1 bis K5 zugeordnet wurde. Diese Zuordnung erfolgt aber erfindungsgemäß nur, wenn ein Maß M für die Sicherheit einer Zuordnung einen vorgegebenen Schwellenwert übersteigt.

In dem Ausführungsbeispiel werden dem neuronalen Netz NET an den Eingangsknoten IN1, ..., IN48 Merkmale des Doppler-verbreiterten Radarecho-Signales präsentiert, das von einem großen Omnibus OB reflektiert wurde. Die Ausgangsknoten ON1, ..., ON5 weisen als Reaktion auf die Eingangsdaten eine Aktivierung auf. Die Aktivierung der Ausgangsknoten ON1, ..., ON5 ist in der Abbildung durch eine schwarze Füllung der Knoten angedeutet. Die Aktivierung ist eine Zahl im Bereich von 0 bis 1. Wird ein Objekt einer Klasse zugeordnet, so weist der zugehörige Ausgangsknoten eine erhöhte Aktivierung im Bereich von 1 auf, während die anderen Ausgangsknoten eine Aktivierung im Bereich von 0 zeigen. Als Klassifikationsergebnis wird im Falle, daß ein zu klassifizierendes Objekt vorhanden ist, der Name der Klasse mit der stärksten Aktivierung gemeldet, anderenfalls wird gemeldet, es sei kein Objekt vorhanden. Im Ausführungsbeispiel beträgt die Aktivierung der Ausgangsknoten ON1,..., ON5 für die einzelnen Klassen:

| Bus K3 | 0,80 |
| Auto K2 | 0,20 |
| Eisenbahn K4 | 0,12 |
| Flugzeug K5 | 0,03 |
| Fußgänger K1 | 0,02 |

Als Maß M für die Sicherheit der Zuordnung wird die Differenz zwischen der Aktivierung des Ausgangsknotens mit der höchsten Aktivierung und der des Ausgangsknotens mit der zweithöchsten Aktivierung gebildet, also $M=0{,}8-0{,}2=0{,}6$. Der Schwellenwert beträgt in dem Beispiel 0,5, so daß eine Klassifikation des großen Omnibusses als Bus stattfindet, da das Maß den Schwellenwert übersteigt.

Die Wahl der geschilderten Differenz als Maß M für die Sicherheit der Klassifikation ist besonders vorteilhaft, da hierbei auf einfache Weise berücksichtigt wird, wie hoch die Verwechslungswahrscheinlichkeit mit der Klasse des Ausgangsknotens mit der zweithöchsten Aktivierung ist. Alternativ wäre es auch möglich, beispielsweise eine quadratische Summe der Differenzen zwischen der höchsten Aktivierung und den Aktivierungen der restlichen Ausgangsknoten zu bilden, oder die höchste Aktivierung an sich als Maß für die Sicherheit der Klassifikation zu verwenden.

In Figur 2 ist ein Flußdiagramm des Verfahrens dargestellt. In einem ersten Schritt 1 wird eine Radarmessung durchgeführt: Eine Pulsfolge kurzer Radarsignale mit einer Pulsfolgefrequenz von beispielsweise 4 kHz und einer Sendefrequenz beispielsweise im Bereich von 10 GHz wird dazu von einer Radarantenne ausgesendet und nach einer gewissen Zeitspanne wird ein reflektiertes Doppler-verbreitertes Radarecho-Signal von der Radarantenne empfangen. Durch die Bauart der Radarantenne ist ein Winkelbereich festgelegt, aus dem das reflektierte Radarsignal empfangen werden kann. Das empfangene Doppler-verbreiterte Radarecho-Signal wird durch eine Demodulation von der Trägerfrequenz des ausgesandten Radarsignales befreit. Hierdurch wird ein als Videosignal bezeichnetes Zeitspektrum mit einer Pulsperiode, die der Pulsfolgefrequenz der ausgesandten Radarsignale entspricht, erhalten. Das Videosignal wird innerhalb jeder Pulsperiode in eine Anzahl Zeitfenster zerlegt, die je nach Laufzeit für eine bestimmte mittlere Entfernung repräsentativ sind. Die Anzahl der Zeitfenster entspricht einer Entfernungsauflösung und hängt von der Pulsdauer der ausgesendeten Radarsignale ab.

Für jedes Zeitfenster wird eine Folge von Werten gebildet, die in aufeinanderfolgenden Pulsperioden zum gleichen Abtastzeitpunkt als mittlerer Abtastwert erhalten werden. Die Folge stellt ein mit der Pulsfolgefrequenz der ausgesandten Radarsignale abgetastetes akustisches Tonsignal dar und wird als Dopplersignal bezeichnet. Die Anzahl an Signalwerten des Dopplersignales hängt von der Beobachtungsdauer ab und beträgt im Ausführungsbeispiel 256. Der Frequenzbereich des Dopplersignales ist durch die Sendefrequenz der Radarsignale bestimmt und dieser proportional. In dem Ausführungsbeispiel beträgt der Frequenzbereich etwa 0 bis 2 kHz. Durch den Winkelbereich der Radarantenne und die mittlere Entfernung der entsprechenden Zeitfenster ist ein vorgegebener Beobachtungsraum in Beobachtungsabschnitte unterteilt und für jeden Beobachtungsabschnitt wird ein Dopplersignal erhalten.

In einem zweiten Schritt 2 wird eine Merkmalsextraktion durchgeführt. Die 256 Signalwerte eines Dopplersignales werden mit Hilfe einer diskreten Fouriertransformation, beispielsweise der FFT (Fast Fourier Transformation), in den Frequenzbereich abgebildet. Die Darstellung erfolgt durch 256 Betragskoeffizienten. Da das transformierte Spektrum symmetrisch ist, brauchen nur die Hälfte einschließlich der Nullstelle, d.h. 129 Betragskoeffizienten betrachtet zu werden. Diese werden quadriert, logarithmiert und anschließen mit Hilfe einer Fourierrücktransformation auf 128 Koeffizienten abgebildet. Eine solche Darstellung wird als Cepstrum bezeichnet und die Koeffizienten heißen Cepstralkoeffizienten. Die Darstellung des Dopplersignales als Cepstrum ist vorteilhaft, da mit dieser Darstellung eine besonders sichere Klassifikation unter Verwendung eines neuronalen Netzes möglich ist.

Die ersten 48 Cepstralkoeffizienten werden dem neuronalen Netz in einem dritten Schritt 3 an den 48 Eingangsknoten als Eingangsdaten präsentiert. Die Ausgangsknoten weisen als Reaktion auf die Eingangsdaten Aktivierungen auf. In einem vierten Schritt 4 wird aus den Aktivierungen der Ausgangsknoten ein Maß M für die Sicherheit, daß ein Objekt einer bestimmten Klasse zuzuordnen ist, bestimmt. Dazu wird beispielsweise die Differenz zwischen der höchsten und der zweithöchsten Aktivierung gebildet. In einem fünften Schritt 5 wird geprüft, of das Maß einen vorgegebenen Schwellenwert übersteigt. Ist dies der Fall, so wird eine Klassifikation K durchgeführt, d.h. es wird entschieden, daß in dem Beobachtungsabschnitt des betreffenden Dopplersignales ein Objekt vorhanden ist, welches zu der Klasse des Ausgangsknotens mit der höchsten Aktivierung gehört.

Übersteigt das Maß M den Schwellenwert nicht, so kann in einem sechsten Schritt 6 ein neues Doppler-verbreitertes Radarsignal des selben Beobachtungsabschnittes ermittelt werden. Dies kann dergestalt erfolgen, daß mit einer rotierenden oder hin und her drehenden Radarantenne eine neue Radarmessung nach dem oben beschriebenen ersten Schritt durchgeführt wird, wenn die Antenne den Winkelbereich des betreffenden Beobachtungsabschnittes erneut überstreicht. Andererseits kann beispielsweise durch Auswertung einer Doppler-Verschiebung des Radarecho-Signales die Präsenz eines bewegten Objektes festgestellt sein, das Objekt selbst ist jedoch noch nicht klassifiziert. In diesem Fall kann es notwendig sein, ein neues Doppler-verbreitertes Radarecho-Signal aus einem benachbarten Beobachtungsabschnitt zu bestimmen, in den sich das zu klassifizierende Objekt in der Zwischenzeit hineinbewegt hat.

In einem siebenten Schritt 7 kann nun eine Mittelungstechnik angewendet werden. Dazu wird über die aufeinanderfolgenden Doppler-verbreiterten Radarecho-Signale des selben Objektes oder Beobachtungsabschnittes oder über die Merkmale, die von den aufeinanderfolgenden Doppler-verbreiterten Radarecho-Signalen des selben Objektes oder Beobachtungsabschnittes abgeleitet sind, gemittelt. Der Vorteil dieses Vorgehens besteht darin, daß das Verhältnis von Signal zu Rauschen und damit das Klassifikationsergebnis des neuronalen Netzes verbessert wird. Eine andere Möglichkeit der Mittelung besteht darin, nach Ermittlung eines neuen Doppler-verbreiterten Radarecho-Signales des selben Objektes oder Beobachtungsabschnittes jeweils über die Aktivierungen eines Ausgangsknotens bei den aufeinanderfolgenden Doppler-verbreiterten Radarecho-Signalen des selben Objektes oder Beobachtungsabschnittes zu summieren oder zu mitteln. Eine Entscheidung für eine Klassifikation wird dann auf Basis dieser akkumulierten Aktivierungen getroffen. Eine weitere Möglichkeit besteht darin, ein Objekt der Klasse zuzuordnen, deren zugehöriger Ausgangsknoten bei aufeinanderfolgenden Doppler-verbreiterten Radarecho-Signalen des selben Objektes oder Beobachtungsabschnittes mehrheitlich die höchste Aktivierung zeigt. Dieses Vorgehen stellt eine Mehrheitsentscheidung aus zeitlich aufeinanderfolgenden Doppler-verbreiterten Radarecho-Signalen dar.

Von besonderem Vorteil ist es, mit zunehmender Anzahl aufeinanderfolgender Doppler-verbreiterter Radarecho-Signale des selben Objektes oder Beobachtungsabschnittes in einem achten Schritt 8, vor erneutem Vergleich von Maß und Schwellenwert, den Schwellenwert zu verringern. Damit wird der Erkenntnis Rechnung getragen, daß die Klassifikationssicherheit mit zunehmender Beobachtungsdauer steigt und es wird eine möglichst frühzeitige Beendigung des Klassifikationsvorganges bewirkt. Für einen Abbruch des Klassifikationsvorganges nach dem ersten Doppler-verbreiterten Radarecho-Signal kann beispielsweise in Form eines hohen Schwellenwertes eine sehr genaue Übereinstimmung des Objektes mit der trainierten Klasse gefordert werden. Mit zunehmender Beobachtungs- und damit Mittelungsdauer kann dieses Kriterium durch Herabsetzen des Schwellenwertes weniger streng gefordert werden. In dem Ausführungsbeispiel wird der Schwellenwert daher nach Ermittlung eines neuen Doppler-verbreiterten Radarecho-Signals des selben Objektes oder Beobachtungsabschnittes um 10 % herabgesetzt, bis eine Klassifikation erfolgt ist. Dabei kann auch das Klassifikationsergebnis auftreten, daß kein Objekt in dem Beobachtungsabschnitt vorhanden ist, wenn beispielsweise alle Ausgangsknoten eine verschwindende Aktivierung aufweisen.

Ein besonderer Vorteil des erfindungsgemäßen Verfahrens besteht darin, daß äußerst kurze Radarecho-Signale mit einer Dauer von nur etwa hundert Millisekunden verwendet werden können und insbesondere durch die aufgeführten Mittelungstechniken zu einer sicheren Klassifikation mit einer hohen Erkennungsrate von über 90 % führen. Dadurch kann das erfindungsgemäße Klassifikationsverfahren auch in einer als ,,Trackwhile-Scan" bezeichneten Betriebsart eines Radargerätes eingesetzt werden. In dieser Betriebsart überstreicht die Antenne des Radargerätes den Winkelbereich des ganzen Beobachtungsraumes periodisch und jeder Beobachtungsabschnitt wird in jeder Periode nur kurzzeitig erfaßt. Die Verwendung der äußerst kurzen Radarecho-Signale bewirkt, daß die Pausen von einer Erfassung eines Beobachtungsabschnittes zur nächsten gering sind. Zur Beobachtung und Verfolgung eines erkannten Objektes muß die Radarantenne also nicht dauernd auf das entsprechende Objekt gerichtet bleiben, sondern es reicht aus, bei jedem Überstreichen des entsprechenden Winkelbereiches, in dem das Objekt sich befindet, ein Doppler-verbreitertes Radarecho-Signal zu ermitteln, um das Objekt zu beobachten oder die Klassifikation nach dem erfindungsgemäßen Verfahren fortzusetzen.

Bei Ermittlung mehrerer aufeinanderfolgender Doppler-verbreiterter Radarecho-Signale des selben Objektes oder Beobachtungsabschnittes ist es vorteilhaft, zunächst eine Klassifikation in Grobklassen und mit zunehmender Anzahl aufeinanderfolgender Doppler-verbreiterter Radarecho-Signale eine Klassifikation in Fein klassen vorzunehmen. Grobklassen können beispielsweise Bodenfahrzeuge, Flugzeuge und Fußgänger sein, die aufgrund ihrer sehr unterschiedlichen Bewegungsabläufe sehr unterschiedliche Dopplersignale aufweisen und zwischen denen aus diesem Grund kaum eine Verwechslungswahrscheinlichkeit besteht. Mit zunemender Anzahl aufeinanderfolgender Doppler-verbreiterter Radarecho-Signale kann dann die Grobklasse Bodenfahrzeuge in die Feinklassen Auto, Bus oder Eisenbahn unterteilt werden. Für die Klassifikation in Grobklassen wird als Maß beispielsweise die Differenz zwischen der stärksten Aktivierung in jeder Grobklasse verwendet. Dadurch ist der Klassifikationsvorgang in wenige Grobklassen deutlich schneller abgeschlossen, als ein Klassifikationsvorgang in eine größere Anzahl Klassen oder Feinklassen.

Bei einer besonders vorteilhaften Ausführung des erfindungsgemäßen Verfahrens hängt der Schwellenwert von der Entfernung zwischen der Radarantenne und dem Beobachtungsabschnitt, aus dem das Doppler-verbreiterte Radarecho-Signal reflektiert wurde, ab. In diesem Fall wird also für jede mittlere Entfernung ein eigener Schwellenwert verwendet, und zwar liegt der Schwellenwert für weiter entfernte Beobachtungsabschnitte höher als für nähere Beobachtungsabschnitte. Dadurch wird die Erkenntnis berücksichtigt, daß weiter entfernte Objekte bei einer Klassifikation leichter verwechselt werden als nähere. Für nähere Objekte kann bereits mit einem oder zumindest wenigen Doppler-verbreiterten Radarecho-Signalen eine korrekte Klassifikation durchgeführt werden, während für weiter entfernte Objekte je nach Typ des Objektes und Störeinflüssen wie Witterung, Seegang etc. eine größere Anzahl Doppler-verbreiterter Radarecho-Signale für eine sichere Klassifikation nötig sein kann.

Ein weiterer Vorteil ergibt sich bei einem Einsatz von mehreren neuronalen Netzen zur Klassifikation. Die mehreren neuronalen Netze können entweder parallel oder sequentiell arbeiten. Aus den Klassifikationsergebnissen der einzelnen neuronalen Netze kann eine Entscheidung zur Klassifikation durch einen Mehrheitsentscheid gefällt werden. Bei bekannter Zuverlässigkeit bestimmter neuronaler Netze kann auch eine gewichtete Mehrheitsentscheidung gefällt werden, d.h. daß dem Klassifikationsergebnis bestimmter neuronaler Netze mehr Gewicht verliehen wird. Die einzelnen neuronalen Netze können mit unterschiedlichen Trainingsdaten oder nach unterschiedlichen Algorithmen trainiert sein und/oder eine unterschiedliche Topologie aufweisen. Durch diese Maßnahmen ergibt sich eine weitere Erhöhung der Klassifikationssicherheit. Zudem können Konflikte, die auftreten, wenn ein einziges neuronales Netz eine hohe Verwechslungswahrscheinlichkeit zwischen bestimmten Klassen aufweist, durch die parallele Verwendung mehrerer verschiedener neuronaler Netze gelöst werden. Ein weiterer Vorteil liegt darin, daß bei der Verwendung meherer parallel arbeitender neuronaler Netze ein Klassifikationsvorgang schneller und mit weniger aufeinanderfolgenden Doppler-verbreiterten Radarecho-Signalen durchgeführt werden kann.

Die Vorrichtung zur Durchführung des erfindungsgemäßen Verfahrens weist ein neuronales Netz mit Ausgangsknoten für Klassen auf. In der erfindungsgemäßen Vorrichtung kann das neuronale Netz durch parallel arbeitende, vernetzte Mikroprozessoren ausgeführt sein. Im Ausführungsbeispiel ist aber eine Ausführung mit nur einem Mikroprozessor realisiert, der die einzelnen Knoten des neuronalen Netzes sequentiell abarbeitet. Die Vorrichtung hat zudem Mittel zum Bestimmen des Maßes für die Klassifikationssicherheit aus den Aktivierungen der Ausgangsknoten und Mitteln zum Feststellen, ob das Maß den vorgegebenen Schwellenwert übersteigt. Im Ausführungsbeispiel handelt es sich bei beiden Mitteln ebenfalls um den einzigen Mikroprozessor.

Das neuronale Netz besteht aus drei Schichten, wobei zwischen der Eingangsschicht und der Ausgangsschicht eine verborgene Schicht angeordnet ist. Denkbar ist auch der Einsatz von zwei oder mehr verborgenen Schichten. Allerdings steigt dabei der Rechenaufwand, der nötig ist, um die Aktivierung der einzelnen Knoten der Schichten zu berechnen, ohne daß mit einer Topologie mit mehr als einer verborgenen Schicht wesentlich bessere Klassifikationsergebnisse erzielt werden. Der Einsatz eines neuronalen Netzes mit drei Schichten ist daher bevorzugt.

**Patentansprüche**

1. Verfahren zur automatischen Klassifikation von Objekten mittels Doppler-verbreiterter Radarecho-Signale, bei dem

   - zur Klassifikation ein neuronales Netz (NET) mit Ausgangsknoten (ON1, ... , ON5) für vorgegebene Klassen (K1, ..., K5) verwendet wird, die jeweils als Antwort auf dem neuronalen Netz (NET) präsentierte Merkmale eines Doppler-verbreiterten Radarecho-Signals eine Aktivierung zeigen,

   - aus der Aktivierung von einem oderer mehreren der Ausgangsknoten (ON1, ..., ON5) ein Maß (M) für die Sicherheit, daß ein Objekt einer bestimmten Klasse zuzuordnen ist, bestimmt wird und

   - eine Klassifikation (K) nur dann statt findet, wenn das Maß (M) einen vorgegebenen Schwellenwert übersteigt.

2. Verfahren nach Anspruch 1, bei dem als das Maß (M) eine Differenz zwischen der Aktivierung des Ausgangsknotens (ON3) mit der höchsten Aktivierung und der des Ausgangsknotens (ON2) mit der zweithöchsten Aktivierung verwendet wird.

3. Verfahren nach Anspruch 1, bei dem in dem Fall, daß das Maß (M) den vorgegebenen Schwellwert unterschreitet und keine Klassifikation statt findet, solange neue, aufeinanderfolgende Doppler-verbreiterte Radarecho-Signale des selben Objektes oder Beobachtungsabschnittes ermittelt werden (6), bis eine Klassifikation (K) statt findet.

4. Verfahren nach Anspruch 3, bei dem über aufeinanderfolgende Doppler-verbreiterte Radarecho-Signale des selben Objektes oder Beobachtungsabschnittes oder über Merkmale, die von aufeinanderfolgenden Doppler-verbreiterten Radarecho-Signalen des selben Objektes oder Beobachtungsabschnittes abgeleitet sind, gemittelt wird.

5. Verfahren nach Anspruch 3, bei dem nach Ermittlung eines neuen Doppler-verbreiterten Radarecho-Signales des selben Objektes oder Beobachtungsabschnittes jeweils über die Aktivierungen eines Ausgangsknotens bei den aufeinanderfolgenden Doppler-verbreiterten Radarecho-Signalen des selben Objektes oder Beobachtungsabschnittes summiert oder gemittelt wird.

6. Verfahren nach Anspruch 3, bei dem ein Objekt der Klasse zugeordnet wird, deren Ausgangsknoten bei aufeinanderfolgenden Doppler-verbreiterten Radarecho-Signalen des selben Objektes oder Beobachtungsabschnittes mehrheitlich die höchste Aktivierung aufweist.

7. Verfahren nach Anspruch 3, 4, 5 oder 6, bei dem der Schwellenwert mit zunehmender Anzahl aufeinanderfolgender Doppler-verbreiterter Radarecho-Signale des selben Objektes oder Beobachtungsabschnittes verringert wird (8).

8. Verfahren nach einem der Ansprüche 3 bis 7, bei dem zunächst eine Klassifikation in Grobklassen und mit zunehmender Anzahl aufeinanderfolgender Doppler-verbreiterter Radarecho-Signale des selben Objektes oder Beobachtungsabschnittes eine Klassifikation in Feinklassen erfolgt.

9. Verfahren nach Anspruch 1, bei dem der Schwellenwert von der Entfernung zwischen einer das Doppler-verbreiterte Radarecho-Signal emfpangenden Radarantenne und dem Beobachtungsabschnitt, aus dem das Doppler-verbreiterte Radarecho-Signal reflektiert wurde, in der Weise abhängt, daß er für weiter entfernte Beobachtungsabschnitte höher liegt als für nähere Beobachtungsabschnitte.

10. Verfahren nach Anspruch 1, bei dem mehrere neuronale Netze zur Klassifikation eingesetzt werden, und eine Entscheidung zur Klassifikation getroffen wird, die eine Mehrheitsentscheidung oder eine gewichtete Mehrheitsentscheidung aus den Klassifikationsergebnissen der einzelnen neuronalen Netze ist.

11. Verfahren nach Anspruch 10, bei dem die mehreren neuronalen Netze mit unterschiedlichen Trainingsdaten oder nach unterschiedlichen Algorithmen trainiert sind und/oder eine unterschiedliche Topologie aufweisen.

12. Vorrichtung zur Durchführung des Verfahrens nach Anspruch 1 mit

- einem neuronalen Netz (NET), das Ausgangsknoten (ON1,..., ON5) für Klassen (K1,..., K5) aufweist,
- Mittel zum Bestimmen eines Maßes (M) für die Sicherheit, daß ein Objekt eines bestimmten Klasse zuzuordnen ist, aus Aktivierungen der Ausgangsknoten (ON1, ..., ON5),
- Mitteln zum Feststellen, ob das Maß (M) einen vorgegebenen Schwellenwert übersteigt.

Fig.1

Fig.2